(19) Europäisches Patentamt / European Patent Office / Office européen des brevets

(11) **EP 4 478 677 A1**

(12) **EUROPEAN PATENT APPLICATION**
published in accordance with Art. 153(4) EPC

(43) Date of publication:
**18.12.2024 Bulletin 2024/51**

(21) Application number: **23773696.2**

(22) Date of filing: **16.03.2023**

(51) International Patent Classification (IPC):
**H04L 41/14** *(2022.01)*

(52) Cooperative Patent Classification (CPC):
**H04L 41/14; H04L 41/16; H04W 16/22**

(86) International application number:
**PCT/CN2023/081870**

(87) International publication number:
**WO 2023/179448 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2022 CN 202210288551**

(71) Applicant: **Huawei Technologies Co., Ltd.**
**Shenzhen, Guangdong 518129 (CN)**

(72) Inventors:
• **CHEN, Jiaxuan**
  **Shenzhen, Guangdong 518129 (CN)**
• **HANG, Haicun**
  **Shenzhen, Guangdong 518129 (CN)**
• **JIN, Huangping**
  **Shenzhen, Guangdong 518129 (CN)**
• **WU, Yiqun**
  **Shenzhen, Guangdong 518129 (CN)**
• **LIANG, Jing**
  **Shenzhen, Guangdong 518129 (CN)**

(74) Representative: **Maiwald GmbH**
**Engineering**
**Elisenhof**
**Elisenstrasse 3**
**80335 München (DE)**

(54) **INFORMATION TRANSMISSION METHOD AND APPARATUS**

(57) This disclosure provides an information transmission method and an apparatus, and relates to the field of communication technologies. The method includes: A first device receives N pieces of first node information from a second device, so that a first artificial intelligence model can be determined based on the N pieces of first node information and first link information, in other words, a structure of the first artificial intelligence model can be reconstructed. According to the method, when the second device indicates an artificial intelligence model to the first device, node information of a node and a connection relationship between nodes may be separately indicated. In addition, if the connection relationship between the nodes in the artificial intelligence model is a serial structure, the first link information may not be indicated, and only the node information is indicated, so that representation and transmission overheads of the artificial intelligence model can be reduced.

FIG. 3

**Description**

**CROSS-REFERENCE TO RELATED APPLICATIONS**

This application claims priority to Chinese Patent Application No. 202210288551.7, filed with the China National Intellectual Property Administration on March 22, 2022 and entitled "INFORMATION TRANSMISSION METHOD AND APPARATUS", which is incorporated herein by reference in its entirety.

**TECHNICAL FIELD**

This disclosure relates to the field of communication technologies, and in particular, to an information transmission method and an apparatus.

**BACKGROUND**

In a wireless communication system, application of an artificial intelligence (artificial intelligence, AI) model can significantly improve performance of the communication system. In order to actually deploy a designed AI model in a wireless communication service procedure, a network side/terminal side may need to download a network from a third-party entity, or model interaction may be performed between terminal sides. Therefore, in wireless communication, how to perform model interaction is an important research topic.

**SUMMARY**

This disclosure provides an information transmission method and an apparatus, to provide an AI model description method to reduce AI model overheads.

According to a first aspect, this application provides an information transmission method. The method is used to implement a function on a first device side. For example, the method may be applied to a first device, a chip or module in the first device, or another device or module that can implement the method. A specific entity for performing the method is not limited in embodiments of this application. Optionally, the method may be jointly implemented by a plurality of functional modules on the first device side, and a method performed by each functional module also falls within the protection scope of this application. An example in which the method is applied to the first device is used. In the method, the first device receives N pieces of first node information from a second device, where one piece of first node information indicates information about at least one first node in a first artificial intelligence model, and N is an integer greater than 1; and determines the first artificial intelligence model based on the N pieces of first node information and first link information, where the first link information indicates a connection relationship between M first nodes in the first artificial intelligence model, and M is an integer greater than or equal to N.

By implementing the foregoing method, when indicating an artificial intelligence model to the first device, the second device may separately configure node information of nodes included in the artificial intelligence model and a connection relationship between the nodes. The second device may indicate only the node information included in the artificial intelligence model, so that representation and transmission overheads of the artificial intelligence model can be reduced.

In a possible design, the connection relationship indicated by the connection relationship is preset. The determining the first artificial intelligence model based on the N pieces of first node information and first link information includes: determining, based on the N pieces of first node information, the M first nodes included in the first artificial intelligence model; and determining the first artificial intelligence model based on the preset connection relationship and the M first nodes.

In the foregoing method, when the connection relationship is preset (for example, agreed on in a protocol), the first device may reconstruct the first artificial intelligence model based on the N pieces of first node information and the preset connection relationship, and the second device may not send the first link information to the first device, so that representation and transmission overheads of the artificial intelligence model are further reduced.

In a possible design, the first link information is from the second device. The determining the first artificial intelligence model based on the N pieces of first node information and first link information includes: determining, based on the N pieces of first node information, the M first nodes included in the first artificial intelligence model; and determining the first artificial intelligence model based on the connection relationship indicated by the first link information and the M first nodes. According to the method, the first artificial intelligence model can be flexibly configured.

In a possible design, the first link information indicates X pieces of link attribute information, where X is an integer greater than 0. Each piece of link attribute information corresponds to one link, and the link attribute information indicates at least one of the following information of a link corresponding to the link attribute information: a node that is in the M first nodes and that serves as a source node of the link; a port that is in the source node and that serves as an input port of the link (optionally, if the source node has only one output port A, and the port of the input port of the link includes the output port A, the information may not be indicated); a node that is in the M first nodes and that serves as a target node of the link; or a port that is in the target node and that serves as an output port of the link (optionally, if the target node has only one input port A, and the port of the output port of the link includes the input port A, the information may not be indicated).

In the foregoing method, the first link information indicates, by using the X pieces of link attribute information, the connection relationship between the M first nodes included in the first artificial intelligence model, so that the artificial intelligence model is described by using information that is as simplified as possible.

In a possible design, the first node information indicates at least one of the following information: a node identifier of the at least one first node corresponding to the first node information; an operator identifier of an operator corresponding to the at least one first node; parameter list configuration information of the operator, where the parameter list configuration information indicates a value of at least one parameter included in the operator; weight list configuration information of the operator, where the weight list configuration information indicates a value of at least one weight included in the operator; an input format of the at least one first node; or an output format of the at least one first node.

According to the foregoing method, signaling overheads can be reduced. For example, each first node in the at least one first node has a unique node identifier, in other words, the first node information indicates an identifier of each first node in the at least one first node. At least one of the following information of each first node in the at least one first node is shared or the same: an operator identifier; parameter list configuration information of an operator; weight list configuration information of the operator; an input format; or an output format.

In a possible design, the operator is an operator in a preset standard operator library.

In a possible design, for an operator in the preset standard operator library, one or more of the following information is defined for the operator: an operator identifier of the operator; a parameter list of the operator, where the parameter list of the operator indicates at least one parameter included in the operator and a default value of the at least one parameter; a weight list of the operator, where the weight list of the operator indicates at least one weight corresponding to the operator and a default value of the at least one weight; a parsing mode of the parameter list; or a parsing mode of the weight list.

In a possible design, the method further includes: receiving P pieces of second node information from the second device, where P is an integer greater than 0. The P pieces of second node information indicate information about Q second nodes in a second artificial intelligence model, and Q is an integer greater than or equal to P.

In a possible design, second link information is received from the second device. The second link information indicates a connection relationship between the Q second nodes in the second artificial intelligence model.

In a possible design, the second link information is determined according to an agreement in a protocol. The second link information indicates the connection relationship between the Q second nodes in the second artificial intelligence model. In a possible design, if a third artificial intelligence model includes the first artificial intelligence model and the second artificial intelligence model, the method further includes: receiving third link information from the second device, where the third link information indicates a connection relationship between the M first nodes in the first artificial intelligence model and the Q second nodes in the second artificial intelligence model; and determining the third artificial intelligence model based on the first artificial intelligence model, the second artificial intelligence model, and the third link information.

In the foregoing method, if the third artificial intelligence model may be obtained by combining a plurality of artificial intelligence models, and the second device has indicated a part of the plurality of artificial intelligence models to the first device, the second device may not need to indicate all the plurality of artificial intelligence models to the first device, and may indicate only another part of the plurality of artificial intelligence models to the first device, so that overheads needed for describing the third artificial intelligence model can be further reduced.

According to a second aspect, this application provides an information transmission method. The method is used to implement a function on a second device side. For example, the method may be applied to a second device, a chip or module in the second device, or another device or module that can implement the method. A specific entity for performing the method is not limited in embodiments of this application. Optionally, the method may be jointly implemented by a plurality of functional modules on the second device side, and a method performed by each functional module also falls within the protection scope of this application. An example in which the method is applied to the second device is used. In the method, the second device determines N pieces of first node information based on a first artificial intelligence model. One piece of first node information indicates information about at least one first node in the first artificial intelligence model, the N pieces of first node information indicate information about M first nodes in the first artificial intelligence model, N is an integer greater than 1, and M is an integer greater than or equal to N. A connection relationship between the M first nodes is indicated by first link information, and the connection relationship is preset.

In a possible design, the N pieces of first node information are sent to the first device.

According to a third aspect, this application provides an information transmission method. The method is used to implement a function on a second device side. For example, the method may be applied to a second device, a chip or module in the second device, or another device or module that can implement the method. A specific entity for performing the method is not limited in embodiments of this application. Optionally, the method may be jointly implemented by a plurality of functional modules on the second device side, and a method performed by each functional module also falls within the protection scope of this application. An example in which the method is applied to the second device is used. In the method, the second device determines N pieces of first node information based on a first artificial intelligence model, where one piece of first node information indicates information about at least one first node in the first artificial intelligence model, and N is an integer greater than 1; and sends the N pieces of first node information and first link information to a first device, where the first link information indicates a connection relationship between M first nodes in the first artificial intelligence model, and M is an integer greater than or equal to N.

For descriptions of the first link information and the first node information, refer to the first aspect. Details are not described herein again.

With reference to the second aspect or the third aspect, in a possible design, the method further includes: sending P pieces of second node information and second link information to the first device, where P is an integer greater than 0. The P pieces of second node information indicate information about Q second nodes in a second artificial intelligence model, and Q is an integer greater than or equal to P. The second link information indicates a connection relationship between the Q second nodes.

With reference to the second aspect or the third aspect, in a possible design, the method further includes: sending P pieces of second node information to the first device, where P is an integer greater than 0. The P pieces of second node information indicate information about Q second nodes in a second artificial intelligence model, and Q is an integer greater than or equal to P.

With reference to the second aspect or the third aspect, in a possible design, if a third artificial intelligence model includes the first artificial intelligence model and the second artificial intelligence model, the method further includes: sending third link information to the first device. The third link information indicates a connection relationship between the M first nodes in the first artificial intelligence model and the Q second nodes in the second artificial intelligence model.

According to a fourth aspect, an embodiment of this disclosure provides a communication apparatus. The communication apparatus may be a terminal device, a module that can implement a function on a terminal device side, or a chip that can be disposed inside the terminal device. Alternatively, the communication apparatus may be an access network device, a module that can implement a function on an access network device side, or a chip that can be disposed inside the access network device. The communication apparatus has a function of implementing the first aspect. For example, the communication apparatus includes a corresponding module, unit, or means (means) for performing a part or all of the steps in the first aspect. The function, unit, or means may be implemented by using software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive information from a second device. The processing unit may be configured to perform some internal operations of the communication apparatus. Functions performed by the processing unit and the communication unit may correspond to the operations in the first aspect.

In a possible design, the communication apparatus includes a processor, and may further include a transceiver. The transceiver is configured to receive and send a signal, and the processor completes the method according to any one of the possible designs or implementations of the first aspect by using the transceiver. The communication apparatus may further include one or more memories. The memory may be configured to be coupled to the processor, and the memory may store a computer program or instructions for implementing the function in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor. The processor may be configured to be coupled to a memory. The memory may store a computer program or instructions for implementing the function in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor and an interface circuit. The processor is configured to: communicate with another apparatus through the interface circuit, and perform the method according to any one of the possible designs or implementations of the first aspect.

According to a fifth aspect, an embodiment of this disclosure provides a communication apparatus. The communication apparatus may be an access network device, a module that can implement a function on an access network device side, or a chip that can be disposed inside the access network device. Alternatively, the communication apparatus may be a terminal device, a module that can implement a function on a terminal device side, or a chip that can be disposed inside the terminal device. The communication apparatus has a function of implementing the second aspect or the third aspect. For example, the communication apparatus includes a corresponding module, unit, or means for performing a part or all of the operations in the second aspect or the third aspect. The module, unit, or means may be implemented by using software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive information from a first device. The processing unit may be configured to perform some internal operations of the communication apparatus. Functions performed by the processing unit and the communication unit may correspond to the operations in the second aspect or the third aspect.

In a possible design, the communication apparatus includes a processor, and may further include a transceiver. The transceiver is configured to receive and send a signal, and the processor completes the method according to any one of the possible designs or implementations of the second aspect or the third aspect by using the transceiver. The communication apparatus may further include one or more memories. The memory may be configured to be coupled to the processor, and the memory may store a computer program or instructions for implementing the function in the second aspect or the third aspect. The processor may execute the computer program or the instructions stored in the memory. When the computer program or the instructions are executed, the communication apparatus is enabled to implement the method according to any one of the possible designs or implementations of the second aspect or the third aspect.

In a possible design, the communication apparatus includes a processor. The processor may be configured to be coupled to a memory. The memory may store a computer program or instructions for implementing the function in the second aspect or the third aspect. The processor may execute the computer program or the instructions stored in the memory. When the computer program or the instructions are executed, the communication apparatus is enabled to implement the method according to any one of the possible designs or implementations of the second aspect or the third aspect.

In a possible design, the communication apparatus includes a processor and an interface circuit. The processor is configured to: communicate with another apparatus through the interface circuit, and perform the method according to any one of the possible designs or implementations of the second aspect or the third aspect.

It may be understood that the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in a memory. In addition, there may be one or more processors, and one or more memories. The memory may be integrated with the processor, or the memory and the processor are disposed separately. In a specific implementation process, the memory and the processor may be integrated into one chip, or may be separately disposed on different chips. A type of the memory and a manner in which the memory and the processor are disposed are not limited in embodiments of this disclosure.

According to a sixth aspect, an embodiment of this disclosure provides a communication system. The communication system includes the communication apparatus according to the fourth aspect and the communication apparatus according to the fifth aspect.

According to a seventh aspect, an embodiment of this disclosure provides a computer-readable storage medium. The computer-readable storage medium stores computer-readable instructions, and when a computer reads and executes the computer-readable instructions, the computer is enabled to implement the method in any one of the possible designs of the first aspect to the third aspect.

According to an eighth aspect, an embodiment of this disclosure provides a computer program product. When a computer reads and executes the computer program product, the computer is enabled to implement the method in any one of the possible designs of the first aspect to the third aspect.

According to a ninth aspect, an embodiment of this disclosure provides a chip. The chip includes a processor. The processor is coupled to a memory, and is configured to read and execute a software program stored in the memory, to implement the method in any one of the possible designs of the first aspect to the third aspect.

According to a tenth aspect, a communication apparatus is provided, and includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method in any one of the first aspect and the possible implementations of the first aspect by using a logic circuit or by executing a computer program or instructions.

According to an eleventh aspect, a communication apparatus is provided, and includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method in any one of the second aspect and the possible implementations of the second aspect or the method in any one of the third aspect and the possible implementations of the third aspect by using a logic circuit or by executing a computer program or instructions.

According to a twelfth aspect, a communication apparatus is provided, and includes a processor and a memory. The processor is coupled to the memory, and the processor is configured to execute a computer program or instructions stored in the memory, to enable the communication apparatus to implement the method in any one of the first aspect and the possible implementations of the first aspect.

According to a thirteenth aspect, a communication apparatus is provided, and includes a processor and a memory. The processor is coupled to the memory, and the processor is configured to execute a computer program or instructions stored in the memory, to enable the communication apparatus to implement the method in any one of the second aspect and the possible implementations of the second aspect or the method in any one of the third aspect and the possible implementations of the third aspect.

According to a fourteenth aspect, a chip is provided. The chip includes a processor, and may further include a memory, and the processor in the chip is configured to execute a computer program or instructions stored in the memory, to enable the chip to implement the method in any one of the first aspect and the possible implementations of the first aspect.

According to a fifteenth aspect, a chip is provided. The chip includes a processor, may further include a memory, and is configured to execute a computer program or instructions stored in the memory, to enable the chip to implement the method in any one of the second aspect and the possible implementations of the second aspect or the method in any one of the third aspect and the possible implementations of the third aspect.

These aspects or another aspect of this disclosure is clearer and more comprehensible in descriptions of the following embodiments.

## BRIEF DESCRIPTION OF DRAWINGS

FIG. 1 is a diagram of a network architecture of a communication system applicable to this disclosure;
FIG. 2 is a diagram of a structure of an artificial intelligence model according to this disclosure;
FIG. 3 is a schematic flowchart of an information transmission method according to this disclosure;
FIG. 4 is a diagram of a structure of an artificial intelligence model according to this disclosure;
FIG. 5 is a diagram of a structure of an artificial intelligence model according to this disclosure;
FIG. 6 is a diagram of a structure of an artificial intelligence model according to this disclosure;
FIG. 7 is a diagram of a structure of an artificial intelligence model according to this disclosure;
FIG. 8 is a diagram of a structure of an artificial intelligence model according to this disclosure;
FIG. 9 is a diagram of a structure of a communication apparatus according to this disclosure; and
FIG. 10 is a diagram of a structure of a communication apparatus according to this disclosure.

## DESCRIPTION OF EMBODIMENTS

The following describes this disclosure in detail with reference to the accompanying drawings in this specification.

Technical solutions of this disclosure may be applied to various communication systems, for example, a long term evolution (long term evolution, LTE) system, a 5th generation (5th generation, 5G) mobile communication system, or a next generation mobile communication system. This is not limited herein. The 5G system may also be referred to as a new radio (new radio, NR) system.

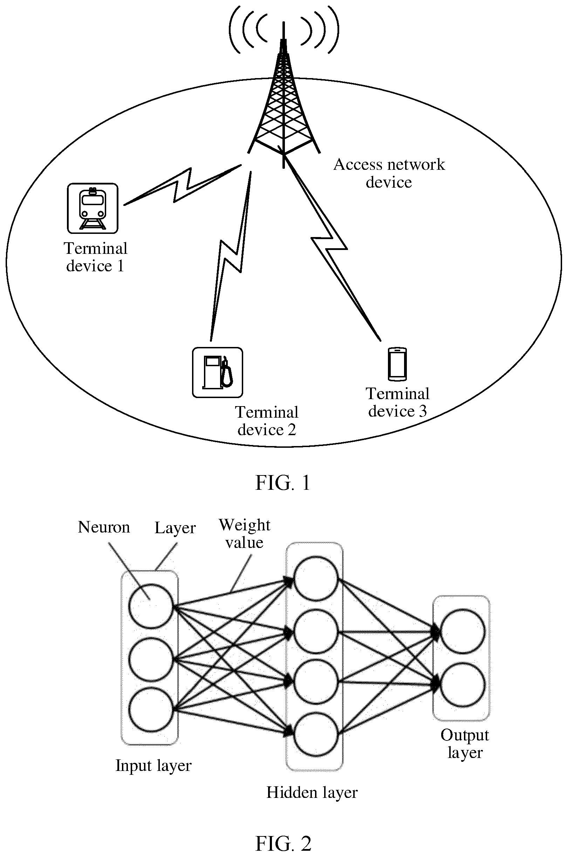

For ease of understanding this disclosure, a communication system applicable to this disclosure is first described in detail by using a communication system shown in FIG. 1 as an example. FIG. 1 is a diagram of an architecture of the communication system that may be applied to this disclosure. The communication system includes an access network device and a terminal device. The terminal device may set up a connection to the access network device, and communicate with the access network device. In the communication system, a terminal device 1 to a terminal device 3 may send uplink data to the access network device, and the access network device may send downlink data to the terminal device 1 to the terminal device 3. In addition, a communication system may also be constituted between terminal devices. For example, in an internet of vehicles system, the terminal device 1 sends data to a terminal device 2, and the terminal device 2 receives the data sent by the terminal device 1. In FIG. 1, three terminal devices are used as an example. Quantities of access network devices and terminal devices included in the communication system are not limited in this disclosure.

In this disclosure, the terminal device may be a device having a wireless transceiver function or a chip that can be disposed in any device. The terminal device may also be referred to as user equipment (user equipment, UE), an access terminal, a subscriber unit, a mobile station, a mobile device, a user terminal, a wireless communication device, a user agent, or a user apparatus. The terminal device in this disclosure may be a mobile phone (mobile phone), a tablet computer (tablet computer), a computer having a wireless transceiver function, a virtual reality (virtual reality, VR) terminal, an augmented reality (augmented reality, AR) terminal, a wearable device, a vehicle, an uncrewed aerial vehicle, an airplane, a ship, a robot, a smart household, or the like. The terminal device in this disclosure may be widely used in communication in various scenarios, for example, including but not limited to at least one of the following scenarios: device-to-device (device-to-device, D2D), vehicle-to-everything (vehicle-to-everything, V2X), machine-type communication (machine-type communication, MTC), internet of things (internet of things, IoT), virtual reality, augmented reality, industrial control, self-driving, telemedicine, a smart grid, smart furniture, smart office, smart wear, smart transportation, or a smart city. A specific technology and a specific device form that are used by the terminal are not limited in this disclosure.

In this disclosure, an apparatus configured to implement a function of the terminal may be a terminal or an apparatus, for example, a chip system, a hardware circuit, a software module, or a combination of the hardware circuit and the software module, that can support the terminal in implementing the function. The apparatus may be installed in the terminal or used together with the terminal. For ease of description, the following describes the technical solutions provided in this disclosure by using an example in which the apparatus configured to implement the function of the terminal is the terminal.

The access network device may be a base station (base station), an evolved NodeB (evolved NodeB, eNodeB), a transmission reception point (transmission reception point, TRP), a next generation NodeB (next generation NodeB, gNB) in a 5G mobile communication system, an access network device in an open radio access network (open radio access network, O-RAN), a next generation NodeB in a 6th generation (6th generation, 6G) mobile communication system, a base station in a future mobile communication system, an access node in a wireless fidelity (wireless fidelity, Wi-Fi) system, or the like. Alternatively, the access network device may be a module or a unit that completes a part of functions of a base station, for example, may be a central unit (central unit, CU), a distributed unit (distributed unit, DU), a central unit control plane (CU control plane, CU-CP) module, or a central unit user plane (CU user plane, CU-UP) module. A specific technology and a specific device form that are used by the access network device are not limited in this disclosure.

In this disclosure, an apparatus configured to implement a function of the access network device may be an access network device or an apparatus, for example, a chip system, that can support the access network device in implementing the function. The apparatus may be installed in the access network device or used together with the access network device. In the following disclosure, the technical solutions provided in this disclosure are described by using an example in which the apparatus configured to implement the function of the access network device is the access network device, and the access network device is the base station.

(1) Protocol layer structure

Communication between an access network device and a terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer for performing transmission of data related to an AI function.

(2) Central unit (central unit, CU) and distributed unit (distributed unit, DU)

An access device may include the CU and the DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F 1-U. A specific name of each interface is not limited in this disclosure. The CU and the DU may be obtained through division based on protocol layers of a wireless network. For example, functions of a PDCP layer and a protocol layer above the PDCP layer are set on the CU, and functions of protocol layers (for example, an RLC layer and a MAC layer) below the PDCP layer are set on the DU. For another example, a function of a protocol layer above a PDCP layer is set on the CU, and functions of the PDCP layer and protocol layers below the PDCP layer are set on the DU. This is not limited.

Division of processing functions of the CU and the DU based on protocol layers is merely an example, and may alternatively be divided in another manner. For example, the CU or the DU may have functions of more protocol layers through division. For another example, the CU or the DU may have a part of processing functions of a protocol layer through further division. In a design, a part of functions of the RLC layer and a function of a protocol layer above the RLC layer are set on the CU, and a remaining function of the RLC layer and a function of a protocol layer below the RLC layer are set on the DU. In another design, division of functions of the CU or the DU may alternatively be performed based on service types or other system requirements. For example, division may be performed based on latencies. A function whose processing time needs to meet a latency requirement is set on the DU, and a function whose processing time does not need to meet the latency requirement is set on the CU. In another design, the CU may alternatively have one or more functions of a core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be distinguished at a physical layer (physical layer, PHY). For example, the DU may implement a higher-layer function of the PHY layer, and the RU may implement a lower-layer function of the PHY layer. The higher-layer function of the PHY layer may include a part of functions of the PHY layer. For example, the part of the functions are closer to the MAC layer. The lower-layer function of the PHY layer may include another part of the functions of the PHY layer. For example, the part of the functions are closer to the radio frequency function. For example, the higher-layer function of the PHY layer may include CRC code addition, channel coding, rate matching, scrambling, modulation, and layer mapping, and the lower-layer function of the PHY layer may include precoding, resource mapping, physical antenna mapping, and a radio frequency sending function. Alternatively, the higher-layer function of the PHY layer may include CRC code addition, channel coding, rate matching, scrambling, modulation, layer mapping, and precoding, and the lower-layer function of the PHY layer may include resource mapping, physical antenna mapping, and a radio frequency sending function.

For example, a function of the CU may be implemented by one entity, or may be implemented by different entities. For example, the function of the CU may be further divided. To be specific, a control plane and a user plane are separated and implemented by different entities. The different entities are respectively a control plane CU entity (that is, a CU-CP entity) and a user plane CU entity (that is, a CU-UP entity). The CU-CP entity and the CU-UP entity may be coupled to the DU, to jointly complete a function of an access network device.

Optionally, any one of the DU, the CU, the CU-CP, the CU-UP, and the RU may be a software module, a hardware structure, or a combination of the software module and the hardware structure. This is not limited. Different entities may exist in different forms. This is not limited. For example, the DU, the CU, the CU-CP, and the CU-UP are software modules, and the RU is the hardware structure. These modules and methods performed by the modules also fall within the protection scope of this disclosure.

In a wireless communication system, application of an AI model can significantly improve performance of the communication system. In order to actually deploy a designed AI model in a wireless communication service procedure, a network side/terminal side may need to download a network from a third-party entity, or model interaction may be performed between terminal sides. In order to enable models to be distributed between devices of vendors and run smoothly for implementing interoperability, a set of general AI model expression paradigms may be defined, so that all devices using different AI frameworks (for example, Pytorch and MXNet) can parse the models. In addition, considering an air interface transmission requirement expressed by the AI model, an AI model expression paradigm should be as concise as possible. In a possible implementation, the AI model may be stored in an open neural network exchange (open neural network exchange, ONNX) file format. An AI model stored in this file format can be applied to different artificial intelligence frameworks. However, storage overheads of the AI model in the ONNX file format are large, and an AI model description method with low overheads is urgently needed, to adapt to the air interface transmission requirement expressed by the AI model. In this disclosure, an AI model description method is provided, to separately describe nodes in an artificial intelligence model and a connection relationship between the nodes, so that overheads generated for describing the artificial intelligence model can be reduced as much as possible, and representation and transmission overheads of the AI model can be reduced.

Before this disclosure is described, some knowledge related to artificial intelligence is first briefly described. The artificial intelligence can enable a machine to have human-like intelligence, for example, can enable the machine to use computer software and hardware to simulate some intelligent human behavior. In order to achieve the artificial intelligence, many other methods including machine learning may be adopted. For example, the machine learning includes a neural network (neural network), an expectation maximization algorithm (expectation maximization algorithm), a support vector machine algorithm, boosting (boosting) algorithm, or a bootstrap aggregating (bootstrap aggregating, bagging) algorithm. In this disclosure, the neural network is used as an example for description. For another machine learning algorithm, refer to the descriptions in this disclosure. Details are not described herein again.

The neural network is a specific embodiment of a machine learning method. The neural network is a mathematical model that imitates a behavior feature of an animal neural network and processes information. FIG. 2 is a diagram of a neural network model according to this disclosure. A neural network in FIG. 2 is a network that may be organized by three types of computing layers: an input layer, a hidden layer, and an output layer. Each layer has one or more logical determining units. The logical determining units are referred to as neurons (neurons). Common neural network structures include a feedforward neural network (feedforward neural network, FNN), a convolutional neural network (convolutional neural network, CNN), and a recurrent neural network (recurrent neural network, RNN). FIG. 2 shows an FNN network. The FNN network is characterized in that neurons at adjacent layers are completely connected to each other. These neural network structures are constituted based on neurons. In the neural network, each neuron performs a weighted addition operation on an input value of the neuron, and for a result obtained through the weighted addition, an output is generated by using a non-linear function. A weight value for performing the weighted addition operation by the neuron in the neural network and the non-linear function may be referred to as parameters of the neural network. A connection relationship between neurons in a neural network is referred to as a neural network structure, and parameters of all neurons in the neural network constitute parameters of the neural network.

For example, it is assumed that an input of a neuron is $x = [x_0, ..., x_n]$, a weight value corresponding to the input is w = $[w_0, ..., w_n]$, and a bias of weighted addition is b. There may be diverse forms of activation functions. Assuming that an activation function of a neuron is $y = f(z) = \max(0, z)$, an output of the neuron is

$$y = f\left(\sum_{i=0}^{i=n} w_i * x_i + b\right) = \max\left(0, \sum_{i=0}^{i=n} w_i * x_i + b\right).$$ For another example, an activation function of a neuron is $y = f(z) = z$, and an output of the neuron is $$y = f\left(\sum_{i=0}^{i=n} w_i * x_i + b\right) = \sum_{i=0}^{i=n} w_i * x_i + b$$ b, $w_i$, and $x_i$ may be various possible values such as decimals, integers (including 0, positive integers, negative integers, or the like), or complex numbers. The foregoing is merely an example. There may be another implementation of the activation function. Activation functions of different neurons in the neural network may be the same or different.

In embodiments of this disclosure, unless otherwise specified or there is a logic conflict, terms and/or descriptions between different embodiments are consistent and may be mutually referenced, and technical features in different embodiments may be combined based on an internal logical relationship thereof, to form a new embodiment.

It may be understood that various numerals used in this disclosure are merely differentiated for ease of description, but are not used to limit the scope of this disclosure. Sequence numbers of the foregoing processes do not mean execution sequences, and the execution sequences of the processes should be determined based on functions and internal logic of the processes.

"And/or" in this disclosure describes an association relationship for describing associated objects and represents that three relationships may exist. For example, A and/or B may represent the following three cases: Only A exists, both A and B exist, and only B exists. The character "/" generally represents an "or" relationship between the associated objects. "A plurality of" in this disclosure means two or more than two.

In description of this disclosure, words such as "first" and "second" are merely for distinguishing between descriptions, and cannot be understood as an indication or implication of relative importance, or cannot be understood as an indication of implication of a sequence.

In addition, in this disclosure, the word "example" represents giving an example, an illustration, or a description. Any embodiment or design scheme described as the "example" in this disclosure should not be explained as being more preferred or having more advantages than another embodiment or design scheme. Exactly, the word "example" is used to present a concept in a specific manner.

A network architecture and a service scenario described in this disclosure are intended to more clearly describe the technical solutions of this disclosure, and do not constitute a limitation on the technical solutions provided in this disclosure. A person of ordinary skill in the art may know that with evolution of the network architecture and emergence of a new service scenario, the technical solutions provided this disclosure are also applicable to a similar technical problem.

In some scenarios of this disclosure, an NR network scenario is used as an example for description. It should be noted that the solutions in this disclosure may be further applied to another wireless communication network, and a corresponding name may be replaced with a name of a corresponding function in the another wireless communication network.

In this disclosure, interaction between a first device side and a second device side is used as an example for description. A method performed on the first device side may be applied to a first device or a chip in the first device. A method performed on the second device side may be applied to a second device or a chip in the second device. The first device may be a terminal device, or a module or a chip in the terminal device. Alternatively, the first device may be an access network device, a module or a chip in the access network device, or the like. The second device may be a terminal device, or a module or a chip in the terminal device. Alternatively, the second device may be an access network device, a module or a chip in the access network device, or the like. This is not limited in this disclosure. When the first device corresponds to the access network device, the second device corresponds to the terminal device. When the first device corresponds to the terminal device, the second device corresponds to the access network device.

One artificial intelligence model includes a plurality of nodes, and the nodes included in one artificial intelligence model may be classified into an input node (input), an output node (output), and an operation node. The input node and the output node can be considered as a type of special operation node, in other words, a unit mapping operation is implemented. For an operation node other than the input node and the output node, one node may include one operator, and one operator indicates one mathematical operation. For example, if a node includes a two-dimensional convolution operator, it represents that the node can implement a two-dimensional convolution operation.

In this disclosure, in order to reduce overheads generated by describing nodes in an artificial intelligence model, a standard operator library may be preset in the first device and the second device. The standard operator library may include at least one type of operator. The "being preset" includes: being agreed on in a protocol, being pre-configured by the first device for the second device by using signaling, being reported by the first device to the second device by using signaling, being configured by another device (for example, an AI network element or a network element implementing an AI function) for the first device and the second device by using signaling, or being downloaded by the first device and the second device from a third-party website, and the like. This is not limited. When the second device provides node information to describe which operators are included in nodes in an artificial intelligence model, identifiers of these operators in the standard operator library may be used for representation. In this way, specific content of these operators does not need to be additionally described. The first device may determine, with reference to the node information indicated by the second device and the standard operator library, which operators are included in the nodes in the artificial intelligence model.

An operator supported by the standard operator library in this disclosure may include but is not limited to at least one of the following types of operators: a one-dimensional convolution (one-dimensional convolution, Conv1D) operating operator, a two-dimensional convolution (two-dimensional convolution, Conv2D) operating operator, a three-dimensional convolution (three-dimensional convolution, Conv3D) operating operator, a long-short term memory (long-short term memory, LSTM) operator, a recurrent neural network (recurrent neural network, RNN) operator, a pooling operator, an activation operator, a local response normalization/batch normalization operator, a classifier operator, a full-connection (dense) operator, an attention mechanism (attention) operator, an addition (add) operator, concatenation (concat) operator, a matrix multiplication operator, a tensor addition/subtraction operator, a tensor logical operator, or a tensor transformation operator.

Specific functions of the foregoing operators and expressions of corresponding mathematical functions are not limited herein in this disclosure, and are not listed one by one herein. In actual application, a custom operator may be further added to the standard operator library based on a requirement of itself. This is not limited in this disclosure.

In this disclosure, one or more pieces of the following information may be defined for each operator in the standard operator library:

operator identifier or number;
parameter (list) of the operator;
weight (list) of the operator;
parsing mode of the parameter list; and
parsing mode of the weight list.

Each type of operator in the standard operator library may correspond to a unique name or number, and a name or number of an operator may serve as an operator identifier of the operator. For example, an operator identifier of the one-dimensional convolution operating operator may be Conv1D, an operator identifier of the two-dimensional convolution operating operator may be Conv2D, an operator identifier of the three-dimensional convolution operating operator may be Conv3D, an operator identifier of the recurrent neural network operator may be RNN, an operator identifier of the long-short term memory neural network operator may be LSTM, an operator identifier of the full-connection operator may be dense, an operator identifier of the attention mechanism operator may be attention, an operator identifier of the activation operator may be activation, an operator identifier of the addition operator may be add, and an operator identifier of the concatenation operator may be concat. Examples are not provided herein one by one again.

Assuming that there are L operator types in total in the operator library, operator identifiers may be configured by using $\lceil log_2(L) \rceil$ bits, where L is a positive integer. For example, there are 10 types of operators: Conv1D, Conv2D, Conv3D, RNN, LSTM, dense, attention, activation, add, and concat, and numbers of the types of operators are respectively 0 to 9. In this case, when an operator identifier is configured, the operator identifier may be indicated by using $\lceil log_2(L) \rceil = 4$ bits. For example, when a value indicated by the 4 bits is 0001, a configured operator is Conv2D.

In this disclosure, each type of operator may correspond to one or more parameters. When the one or more parameters are shown in a form of a list, the one or more parameters may be referred to as parameter lists. A parameter list of an operator of a type may indicate which parameter is included in the operator. For an operator of the type, a parameter list of the operator may indicate a default value of the parameter. If an operator does not include a parameter, a parameter list corresponding to the operator does not include any parameter. If an operator includes a parameter, a parameter list corresponding to the operator includes at least one parameter. For example, for the Conv1D, Conv2D, or Conv3D operator, a parameter of the Conv1D, Conv2D, or Conv3D operator includes at least one of the following: a convolution kernel size (kernel_size), a convolution stride (stride), a padding mode (padding), or the like; for the RNN operator, a parameter of the RNN operator includes an input sequence step (step), an output indication (return_sequence), and/or the like; for the dense operator, a parameter of the dense operator includes an input/output dimension, an activation function type, and/or the like; and for the concat operator, a parameter of the concat operator includes a concatenation dimension (axis), and/or the like. Examples for parameters included in other operators are not enumerated again.

In this disclosure, each type of operator may correspond to one or more weights. When the one or more weights are shown in a form of a list, the one or more weights may be referred to as weight lists. A weight list of an operator of a type may indicate which weight is included in the operator. For an operator of the type, a weight list of the operator may indicate a default value of the weight. If an operator does not include a weight, a weight list corresponding to the operator does not include any weight. If an operator includes a weight, a weight list corresponding to the operator includes at least one weight. For example, for the Conv2D operator, a weight of the Conv2D operator includes a value of a convolution kernel, and/or the like; and for the dense operator, a weight of the dense operator includes a matrix **W** and/or a bias vector b. Examples for weights included in other operators are not enumerated again. Optionally, the weight list of the operator may be incorporated into the parameter list of the operator.

In this disclosure, a specific function expression of an operator may be determined based on a value of a parameter of the operator and a value of a weight of the operator, in other words, a specific operation may be determined. For example, for the dense operator, the weight of the dense operator includes the matrix **W** and the bias vector b, where a dimension of the vector b is the same as a quantity of rows of the matrix **W;** and the parameter of the dense operator includes the input dimension, the output dimension, and the activation function, where the input dimension corresponds to a quantity of columns of the matrix **W,** the output dimension corresponds to the quantity of rows of the matrix **W,** and the activation function is $\sigma()$. It may be determined, based on a value of the parameter in the parameter list and a value of the weight in the weight list, that an operation corresponding to the dense operator is $y=\sigma(\mathbf{W}^*x+b)$, where x is an input, and y is an output. For the activation function $\sigma()$, common forms are tanh, softmax, and the like. $\tanh(z) = (e^z - e^{-z})/(e^z + e^{-z})$, used to map a real number input z to a real number in [-1, 1], where e represents a natural constant. softmax is used to map a **K**-dimensional real number vector **X** to a **K**-dimensional real number vector **Y**, where an $i^{th}$ element of **Y** $Y_i = e^{X_i}/\sum_j e^{X_j}$, where $X_j$ represents a $j^{th}$ element of an input **X,** and a value of $Y_i$ is within an interval of [0, 1].

For the RNN operator, a weight includes a matrix U, a matrix W, and a matrix V; and the parameter includes an input dimension and an output dimension, where the input dimension corresponds to a quantity of columns of the matrix U, and the output dimension corresponds to a quantity of rows of the matrix U and a quantity of columns of the matrix V or a quantity of columns of the matrix W. It may be determined, based on the value of the parameter in the parameter list and the value of the weight in the weight list, that an operation corresponding to the RNN operator is $y_t = \text{softmax}(V^* s_t)$, where $s_t =$ $\tanh(U^* x_t + W^* s_{t-1})$, where $x_t$ is a $t^{th}$ element in an input sequence, $s_t$ is an intermediate calculation result of a $t^{th}$ iteration, and $y_t$ is an output of the $t^{th}$ iteration.

In this disclosure, when the second device indicates node information of a node to the first device, the node information may include parameter list configuration information of a corresponding operator, and the parameter list configuration information includes a value of a parameter of the corresponding operator. The parsing mode of the parameter list may indicate a correspondence between each parameter in a parameter list of each operator and a value of a parameter in parameter list configuration information corresponding to the operator. The parameter list configuration information of the operator may also be referred to as configuration information of one or more parameters of the operator.

In a possible parsing mode, each parameter in the parameter list of each operator may be in one-to-one correspondence with a value in the parameter list configuration information corresponding to each operator in sequence. For example, assuming that a parameter list of the dense operator includes two parameters: an "input size" and an "output size", parameter list configuration information of the operator includes an array [5, 10]. According to the parsing mode, a $1^{st}$ value in the array is a value of the "input size", and a $2^{nd}$ value is a value of the "output size". Therefore, a value of each parameter of the dense operator may be determined according to the parsing mode.

The foregoing is merely an example. There may be another implementation of a correspondence sequence between each parameter in the parameter list of each operator and the value in the parameter list configuration information corresponding to each operator. This is not limited in this disclosure.

Assuming that in the parameter list, one operator corresponds to E parameters, and E is an integer greater than 0, a quantity of values included in parameter list configuration information of the operator may be less than E. In this case, there is no parameter corresponding to a value in the parameter list configuration information, and the value of the parameter may be a default value. For example, assuming that a parameter list of the dense operator includes two parameters: an "input size" and an "output size", parameter list configuration information of the operator includes an array [5]. According to the parsing mode, a $1^{st}$ value in the array is a value of the "input size". Because the "output size" has no corresponding value, a value of the "output size" may be a default value, for example, the default value is 8.

When a quantity of values included in one piece of parameter list configuration information of an operator is less than a quantity of parameters included in a parameter list of the operator, a parameter whose value is a default value may be pre-agreed on, or may be determined in another manner. This is not limited in this disclosure.

In this disclosure, when the second device indicates node information of a node to the first device, the node information may include weight list configuration information of a corresponding operator, and the weight list configuration information includes a value of a weight of the operator. The parsing mode of the weight list may indicate a correspondence between each weight in a weight list of each operator and a value of a weight in the weight list configuration information corresponding to the operator. The weight list configuration information of the operator may also be referred to as configuration information of one or more weights of the operator.

In a possible parsing mode, each weight in the weight list of each operator may be in one-to-one correspondence with a value in weight list configuration information corresponding to each operator in sequence. For example, assuming that a weight list of the RNN operator includes three weights: the matrix U, the matrix V, and the matrix W, values included in weight list configuration information of the operator are sequentially U0, V0, and W0. According to the parsing mode, a 1st value in the array is a value of the "matrix U", a 2nd value is a value of the "matrix V", and a 3rd value is a value of the "matrix W". Therefore, a value of each weight of the RNN operator may be determined according to the parsing mode.

The foregoing is merely an example. There may be another implementation of a correspondence sequence between each weight in the weight list of each operator and the value in the weight list configuration information corresponding to each operator. This is not limited in this disclosure.

Assuming that in the weight list, one operator corresponds to F weights, and F is an integer greater than 0, a quantity of values included in weight list configuration information of the operator may be less than F. In this case, there is no weight corresponding to a value in the parameter list configuration information, and the value of the weight may be a default value. For example, values included in weight list configuration information of the RNN operator are sequentially U0 and V0. According to the parsing mode, a 1st value in the array is a value of the "matrix U", and a 2nd value is a value of the "matrix V". Because the "matrix W" has no corresponding value, a value of the "matrix W" may be a default value.

When a quantity of values included in one piece of weight list configuration information of an operator is less than a quantity of weights included in a weight list of the operator, a weight whose value is a default value may be pre-agreed on, or may be determined in another manner. This is not limited in this disclosure.

By presetting the standard operator library, when the second device indicates operators corresponding to the nodes in the artificial intelligence model to the first device, specific content of the operators does not need to be additionally described, and only information such as operator names, corresponding parameters, and corresponding weights of these operators in the standard operator library needs to be indicated, so that overheads of describing the artificial intelligence model can be reduced.

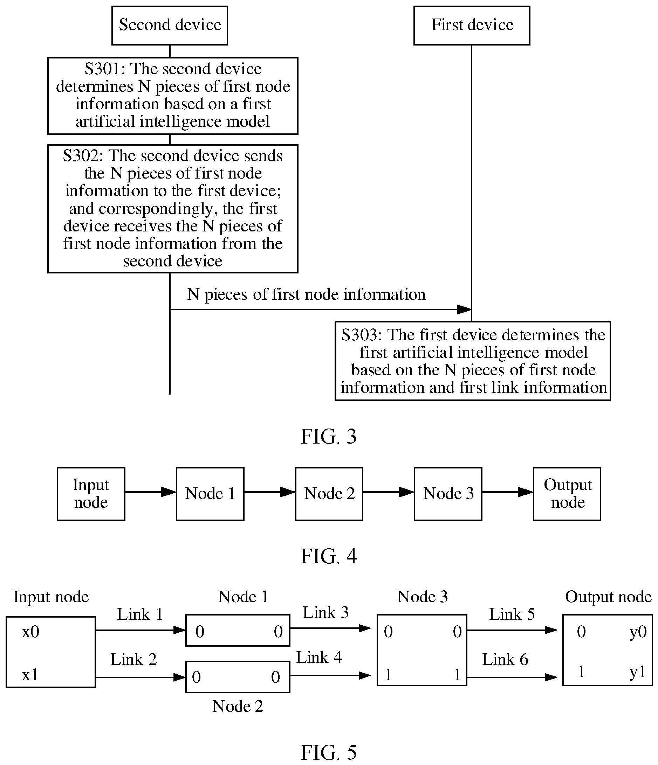

The following describes a method provided in this disclosure by using interaction between the first device and the second device as an example. FIG. 3 is a schematic flowchart of an information transmission method according to this disclosure. The method includes the following steps.

S301: A second device determines N pieces of first node information based on a first artificial intelligence model.

The first artificial intelligence model includes M first nodes, and M is an integer greater than 1. In an artificial intelligence model, each node other than an input node and an output node includes an input port and an output port. A connection relationship may exist between an input port of a node and an output port of another node. One node may include one or more input ports and one or more output ports. Therefore, a connection relationship may exist between one node and a plurality of nodes. When a connection relationship exists between an input port of a node and an output port of another node, that is, when an output of one node serves as an input of another node, it may be considered that a link (link) exists between the input port of the node and the output port of the another node. The link is a virtual concept, and does not mean that there is a physical link connecting the two nodes.

It can be learned with reference to graph-based knowledge that for an artificial intelligence model, a structure of the artificial intelligence model may be indicated by indicating each node in the artificial intelligence model and a connection relationship between nodes. Therefore, in this disclosure, if the second device needs to indicate the first artificial intelligence model to a first device, the second device may indicate, to the first device, the M first nodes included in the first artificial intelligence model and/or a connection relationship between the M first nodes.

With reference to the foregoing descriptions, in this disclosure, the N pieces of first node information may indicate information about the M first nodes included in the first artificial intelligence model, N is an integer greater than 1, and M is greater than or equal to N. For each of the N pieces of first node information, the first node information indicates information about S first nodes in the M first nodes, and S is an integer greater than 0. Values of S corresponding to different first node information may be the same or different. This is not limited.

When S is greater than 1, to be specific, when one piece of first node information indicates information about a plurality of first nodes, it represents that except for different node identifiers, other information between the plurality of first nodes may be the same. According to this method, a plurality of nodes may be indicated by using one piece of node information, so that overheads for describing an artificial intelligence model can be further reduced.

In a possible implementation, as shown in Table 1, first node information may indicate one or more pieces of information in Table 1.

**Table 1: First node information**

| Information | Descriptions of the information |
|---|---|
| Node identifier | A node identifier of a node can uniquely indicate the node in the artificial intelligence model. The node identifier may be defined by the second device, or may be pre-agreed on. For example, it is pre-agreed that a node identifier of an input node is 0, and a node identifier of an output node is -1. If one piece of first node information indicates information about a plurality of first nodes, node identifiers of the plurality of first nodes may be included herein. |
| Operator identifier | To be specific, operator identifiers of operators corresponding to the S first nodes. The operators corresponding to the S first nodes are the same. The operator is an operator in a standard operator library. |
| Parameter list configuration information | The parameter list configuration information indicates at least one parameter included in the operator and/or a value of the at least one parameter. For any one of the at least one parameter, if a value of the parameter is a default value, the value of the parameter may not be indicated. The at least one parameter indicated by the parameter list configuration information may be indicated in a format defined by a parameter list in the standard operator library. |
| Weight list configuration information | The weight list configuration information indicates at least one weight included in the operator and/or a value of the at least one weight For any one of the at least one weight, if a value of the weight is a default value, the value of the weight may not be indicated. The at least one weight indicated by the weight list configuration information may be indicated in a format defined by a weight list in the standard operator library. |
| Input format | Input formats of the S first nodes are the same. An input format of a first node may indicate a quantity of input ports included in the first node. |
| Output format | Output formats of the S first nodes are the same. An output format of a first node may indicate a quantity of output ports included in the first node. |

Further, optionally, the second device determines first link (link) information based on the first artificial intelligence model. The first link information may indicate the connection relationship between the M first nodes in the first artificial intelligence model.

If the connection relationship between the M first nodes in the first artificial intelligence model is preset, the second device may not indicate the first link information. For example, the preset connection relationship between the M first nodes in the first artificial intelligence model is that all first nodes between the input node and the output node are serially connected, and then the second device may not indicate the first link information. Optionally, an implementation in which the second device does not indicate the first link information is that the second device neither determines the first link information nor indicates the first link information. Optionally, another implementation in which the second device does not indicate the first link information is that the second device determines that the first link information is used internally by the second device, but the second device does not indicate the first link information to the first device.

In a possible implementation, in this disclosure, X links may be included between the M first nodes included in the first artificial intelligence model, and X is an integer greater than 0. The first link information may indicate X pieces of link attribute information. Each piece of link attribute information corresponds to one link. For example, as shown in Table 2, link attribute information may indicate one or more pieces of information in Table 2.

**Table 2: Link attribute information**

| Information | Descriptions of the information |
|---|---|
| Source node | The source node is a start node of a link corresponding to the link attribute information, and the source node is a node in the M first nodes. The link attribute information may indicate a node that is in the M first nodes and that serves as a source node of the link. |
| Input port | To be specific, an identifier of a port that is in the source node and that serves as an input port of the link. Optionally, if the source node has only one output port, the information may not be indicated. |

(continued)

| Information | Descriptions of the information |
|---|---|
| Target node | The target node is an end node of the link corresponding to the link attribute information, and the target node is a node in the M first nodes.<br>The link attribute information may indicate a node that is in the M first nodes and that serves as a target node of the link. |
| Output port | To be specific, an identifier of a port that is in the target node and that serves as an output port of the link. Optionally, if the target node has only one input port, the information may not be indicated. |

It can be learned from the foregoing descriptions that each first node included in the first artificial intelligence model may include an input port and an output port, and a connection relationship existing between two first nodes means that the connection relationship exists between the input port of one first node and the output port of the other first node. In this disclosure, the link attribute information indicates two first nodes between which the connection relationship exists, and a corresponding input port and a corresponding output port, so that the connection relationship between the two first nodes can be clearly indicated. Further, the connection relationship between the M first nodes may be indicated by using the X pieces of link attribute information, to indicate a topology structure of the first artificial intelligence model.

S302: The second device sends the N pieces of first node information to the first device; and correspondingly, the first device receives the N pieces of first node information from the second device.

Optionally, the second device may further send the first link information to the first device.

In a possible implementation, if the connection relationship between the M first nodes in the first artificial intelligence model is preset, the second device may not send the first link information to the first device. For example, the preset connection relationship between the M first nodes in the first artificial intelligence model is that all the first nodes between the input node and the output node are serially connected, and then the first link information may not be sent.

For example, FIG. 4 is a diagram of a structure of an artificial intelligence model according to this disclosure. In FIG. 4, the artificial intelligence model includes five nodes, and the five nodes are serially connected. To be specific, an input port of each node is connected to up to one node, and an output port of each node is connected to up to one node. As shown in FIG. 4, a connection sequence of the five nodes is an input node, a node 1, a node 2, a node 3, and an output node. In this case, the second device may not send the first link information. When the first device does not receive the first link information, it is default that the five nodes are serially connected, that is, connected in a manner shown in FIG. 4.

According to this method, when the connection relationship between the nodes in the first artificial intelligence model is preset, the second device does not send the first link information, so that overheads needed for describing the first artificial intelligence model can be further reduced, and overheads needed for transmitting the first artificial intelligence model to the first device are reduced, improving resource utilization.

S303: The first device determines the first artificial intelligence model based on the N pieces of first node information and the first link information.

In this disclosure, the first device may determine, based on the N pieces of first node information, the M first nodes included in the first artificial intelligence model. Specifically, the first device may determine at least one of the following information: a node identifier of each first node in the M first nodes, an operator identifier of an operator corresponding to each first node, a parameter included in the operator corresponding to each first node and a value of the parameter, a weight included in the operator corresponding to each first node and a value of the weight, a quantity of input ports of each first node, or a quantity of output ports of each first node, to determine a specific operation formula of each first node.

Further, the first device may determine the connection relationship between the M first nodes based on the first link information, to determine the topology structure of the first artificial intelligence model. Specifically, the first device may determine the X links based on the X pieces of link attribute information included in the first link information, that is, may determine specific first nodes that are in the M first nodes and between which a connection relationship exists. For any one of the X links, the first device may determine, based on link attribute information of the link, a first node that is in the M first nodes and that serves as a source node and a first node that is in the M first nodes and that serves as a target node, and may further determine which output port of the source node is connected to which input port of the target node. The first device may determine the topology structure of the first artificial intelligence model by using the first link information.

Further, the first device may determine the first artificial intelligence model based on the connection relationship indicated by the first link information and the M first nodes. For example, the first device may connect the M first nodes based on the connection relationship indicated by the first link information, to obtain the first artificial intelligence model.

It should be noted that if the second device does not send the first link information, the connection relationship indicated by the first link information may be preset, and in this case, the first device may connect the M first nodes based on the preset connection relationship, to obtain the first artificial intelligence model.

With reference to the foregoing descriptions, for example, FIG. 5 is a diagram of a structure of a first artificial intelligence model according to this disclosure. The first artificial intelligence model includes five first nodes. The five first nodes are respectively an input node, a node 1, a node 2, a node 3, and an output node, and corresponding node identifiers are respectively 0, 1, 2, 3, and -1.

For example, node information of the input node may be shown in Table 3.

Table 3: Node information of the input node

| Information | Descriptions of the information |
| --- | --- |
| Node identifier | 0. |
| Operator identifier | input. |
| Parameter list configuration information | Input size: [2, 32, 13].<br>Input type: float32. |
| Weight list configuration information | / |
| Input format | Quantity of input ports: 2. |
| Output format | Quantity of output ports: 2. |

With reference to Table 3, the input node includes two input ports and two output ports. The two input ports are respectively an input port 0 (represented by x0) and an input port 1 (represented by x1), and the two output ports are respectively an output port 0 and an output port 1. The input node is separately connected to the node 1 and the node 2. Specifically, the output port 0 of the input node is connected to an input port 0 of the node 1, and a link between the two ports is a link 1. The output port 1 of the input node is connected to the input port 0 of the node 1, and a link between the two ports is a link 2.

The input node does not include an actual data operation, but indicates input information of the artificial intelligence model. An operator corresponding to the input node input does not have a corresponding weight. Therefore, there is no the corresponding value in the weight list configuration information. The parameter list configuration information of the input node includes values of two parameters (the input size and the input type), and may be determined based on input information of the artificial intelligence model. For example, for an artificial intelligence model for channel state information feedback, a channel matrix dimension input to the artificial intelligence model may be [2, nTx, nSub], where 2 represents two parts of a channel: a real part and an imaginary part, nTx represents a quantity of sending ports of a signal whose transmission is performed through the channel, and nSub represents a quantity of subbands of the channel. Therefore, when nTx=32, and nSub=13, a value of the input size parameter in the parameter list configuration information of the input node is [2, 32, 13], representing that input data is a three-dimensional tensor with a size of [2, 32, 13]; if input data of the artificial intelligence model is data of a 32-bit floating point type (float32), a value of the input type parameter in the parameter list configuration information of the input node is float32.

For example, node information of the output node may be shown in Table 4.

Table 4: Node information of the output node

| Information | Descriptions of the information |
| --- | --- |
| Node identifier | -1. |
| Operator identifier | output. |
| Parameter list configuration information | Output type: float32. |
| Weight list configuration information | / |
| Input format | Quantity of input ports: 2. |
| Output format | Quantity of output ports: 2. |

With reference to Table 4, the output node includes two input ports and two output ports. The two output ports are respectively an output port 0 (represented by y0) and an output port 1 (represented by y1), and the two input ports are respectively an input port 0 and an input port 1. The output node is connected to the node 3. Specifically, the input port 0 of the output node is connected to an output port 0 of the node 3, and a link between the two ports is a link 5. The output port 1 of the output node is connected to the output port 1 of the node 3, and a link between the two ports is a link 6.

The output node does not include an actual data operation, but indicates output information of the artificial intelligence model. An operator output corresponding to the output node does not have a corresponding weight. Therefore, there is no the corresponding value in the weight list configuration information. A parameter included in the operator corresponding to the output node may be determined based on output information of the artificial intelligence model. For example, if a type of output data of the artificial intelligence model is float32, a value of the output type parameter in the parameter list configuration information of the output node is float32.

For example, node information of the node 1 may be shown in Table 5.

**Table 5: Node information of the node 1**

| Information | Descriptions of the information |
|---|---|
| Node identifier | 1. |
| Operator identifier | conv2D. |
| Parameter list configuration information | kemel_size=(3, 3).<br>stride=(1, 1).<br>padding='same'. |
| Weight list configuration information | ker. |
| Input format | Quantity of input ports: 1. |
| Output format | Quantity of output ports: 1. |

With reference to Table 5, the node 1 includes one input port and one output port. The node 1 is separately connected to the input node and the node 3. For a specific connection relationship between the node 1 and the input node, refer to the foregoing descriptions. An output port 0 of the node 1 is connected to an input port 0 of the node 3, and a link between the two ports is a link 3.

For the node 1, an operator corresponding to the node 1 is "conv2D", indicating that the node needs to implement a two-dimensional convolution operation. It may be determined, based on the parameter list configuration information, that a convolution kernel of the convolution operation is a two-dimensional matrix of (3, 3), and a convolution stride is (1, 1), in other words, sliding strides of the convolution kernel in both two dimensions are both 1; and a padding mode padding='same', representing that an output size of the convolution operation is the same as an input size. It may be determined, based on the weight list configuration information, that a value of a weight is ker, indicating that a specific value of the convolution kernel with a size of (3, 3) is ker. A specific operation process of the node 1 may be determined based on the node information.

For example, node information of the node 2 may be shown in Table 6.

**Table 6: Node information of the node 2**

| Information | Descriptions of the information |
|---|---|
| Node identifier | 2. |
| Operator identifier | conv2D. |
| Parameter list configuration information | kemel_size=(3, 3).<br>stride=(1, 1).<br>padding='same'. |
| Weight list configuration information | ker2. |
| Input format | Quantity of input ports: 1. |
| Output format | Quantity of output ports: 1. |

With reference to Table 6, the node 2 includes one input port and one output port. The node 2 is separately connected to the input node and the node 3. For a specific connection relationship between the node 2 and the input node, refer to the foregoing descriptions. An output port 0 of the node 2 is connected to an input port 1 of the node 3, and a link between the two ports is a link 4.

For other information of the node 2, refer to the descriptions of the node 1. Details are not described herein again.

It should be noted that in the foregoing examples, the operator corresponding to the node 1 is the same as an operator corresponding to the node 2. If a value of a parameter included in the operator corresponding to the node 1 is the same as a value of a parameter included in the operator corresponding to the node 2, and a value of a weight included in the operator corresponding to the node 1 is also the same as a value of a weight included in the operator corresponding to the node 2, the node 1 and the node 2 may be indicated by using one piece of node information. Specifically, Table 5 and Table 6 may be combined into the following Table 7.

**Table 7: Node information of the node 1 and the node 2**

| Information | Descriptions of the information |
|---|---|
| Node identifier | 1 and 2. |
| Operator identifier | conv2D. |
| Parameter list configuration information | kemel_size=(3, 3).<br>stride=(1, 1).<br>padding='same'. |
| Weight list configuration information | ker2. |
| Input format | Quantity of input ports: 1. |
| Output format | Quantity of output ports: 1. |

Table 7 includes a plurality of node identifiers, that is, the node identifier of the node 1 and the node identifier of the node 2. Therefore, overheads needed for describing nodes of the first artificial intelligence model can be further reduced.

For example, node information of the node 3 may be shown in Table 8.

**Table 8: Node information of the node 3**

| Information | Descriptions of the information |
|---|---|
| Node identifier | 3. |
| Operator identifier | RNN. |
| Parameter list configuration information | steps=2.<br>return_sequence=true. |
| Weight list configuration information | U, W, and V |
| Input format | Quantity of input ports: 2. |
| Output format | Quantity of output ports: 2. |

With reference to Table 8, the node 3 includes two input ports and two output ports. The node 3 is separately connected to the output node, the node 1, and the node 2. For a specific connection relationship, refer to the foregoing descriptions.

For the node 3, an operator corresponding to the node 3 is "RNN", indicating that the node needs to implement a recurrent neural network structure. Based on the parameter list configuration information, it can be determined that the node needs to process an input sequence whose step is: steps=2. The parameter return_sequence=true, representing that an output of the node is a sequence whose step is equal to that of an input, that is, a sequence whose step is 2.

Specific values of a weight are U, W, and V. For example, based on the foregoing parameters, an RNN operator corresponding to the node 3 satisfies the following formula:

$$s_0 = \tanh(U * i_0)$$

$$o_0 = \text{softmax}(V * s_0)$$

$$s_1 = \tanh(U * i_1 + W * s_0)$$

$$o_1 = \text{softmax}(V * s_1).$$

$i_0, i_1$ represents an input sequence whose step is 2 and that is of the node, $o_0, o_1$ represents an output sequence whose step is 2 and that is of the node, $s_0, s_1$ is an intermediate variable in a calculation process, and tanh() and softmax() are two non-linear activation functions.

Further, for example, first link information of the first artificial intelligence model shown in FIG. 5 may be shown in Table 9.

**Table 9: First link information**

| Information | Descriptions of the information |
|---|---|
| Link attribute information of the link 1 | Source node: input node.<br>Input port: output port 0 of the input node.<br>Target node: node 1.<br>Output port: input port 0 of the node 1. |
| Link attribute information of the link 2 | Source node: input node.<br>Input port: output port 1 of the input node.<br>Target node: node 2.<br>Output port: input port 0 of the node 2. |
| Link attribute information of the link 3 | Source node: node 1.<br>Input port: output port 0 of the node 1.<br>Target node: node 3.<br>Output port: input port 0 of the node 3. |
| Link attribute information of the link 4 | Source node: node 2.<br>Input port: output port 0 of the node 2.<br>Target node: node 3.<br>Output port: input port 1 of the node 3. |
| Link attribute information of the link 5 | Source node: node 3.<br>Input port: output port 0 of the node 3.<br>Target node: output node.<br>Output port: input port 0 of the output node. |
| Link attribute information of the link 6 | Source node: node 3.<br>Input port: output port 1 of the node 3.<br>Target node: output node.<br>Output port: input port 1 of the output node. |

When the first device obtains the node information shown in Table 3 to Table 8, the first device may determine specific information of each node in the first artificial intelligence model shown in FIG. 5. Further, when the first device obtains the first link information shown in Table 9, the first device may determine how the nodes that are in the first artificial intelligence model shown in FIG. 5 and that have a connection relationship are specifically connected. The first device may determine the first artificial intelligence model based on the foregoing information, that is, reconstruct the topology structure of the first artificial intelligence model.

In this disclosure, the second device may indicate a plurality of artificial intelligence models to the first device, and a specific quantity is not limited. For example, the second device may further indicate a second artificial intelligence model to the first device. Specifically, assuming that the second artificial intelligence model includes Q second nodes, the second device may send P pieces of second node information to the first device. The P pieces of second node information indicate information about the Q second nodes, and one piece of second node information indicates information about at least one second node in the Q second nodes. P is an integer greater than 0, and Q is an integer greater than or equal to P.

Further, optionally, the second device may further send second link information to the first device. The second link information indicates a connection relationship between the Q second nodes in the second artificial intelligence model.

For specific implementations of the second node information and the second link information, respectively refer to the foregoing descriptions of the first node information and the first link information. Details are not described herein again.

In this disclosure, two or more artificial intelligence models may further constitute a new artificial intelligence model. When the second device indicates an artificial intelligence model to the first device, if the artificial intelligence model may be obtained by combining a plurality of artificial intelligence models, and the second device has indicated a part of the plurality of artificial intelligence models to the first device, the second device may not need to indicate all the plurality of artificial intelligence models to the first device, and may indicate only another part of the plurality of artificial intelligence models to the first device, so that overheads needed for describing the artificial intelligence model can be further reduced.

For example, it is assumed that a third artificial intelligence model includes the first artificial intelligence model and the second artificial intelligence model. For example, the third artificial intelligence model includes the first artificial intelligence model and the second artificial intelligence model. Optionally, it is assumed that the third artificial intelligence model further includes another model, and an indication for the another model is similar to an indication for the third artificial intelligence model. Details are not described again. The following provides descriptions by using an example in which the third artificial intelligence model includes the first artificial intelligence model and the second artificial intelligence model.

In a first implementation, if the second device has indicated the first artificial intelligence model to the first device, but has not indicated the second artificial intelligence model to the first device, the second device may send the P pieces of second node information and the second link information to the first device.

The P pieces of second node information indicate the information about the Q second nodes included in the second artificial intelligence model. The second link information indicates a connection relationship between the M first nodes in the first artificial intelligence model and the Q second nodes in the second artificial intelligence model.

Further, optionally, the second link information may further indicate the connection relationship between the Q second nodes in the second artificial intelligence model.

Optionally, in the implementation, the first artificial intelligence model may be referred to as a basic model, and the second artificial intelligence model may be referred to as a supplementary model. In other words, the third artificial intelligence model is obtained by using the second artificial intelligence model as a supplement based on the first artificial intelligence model.

In a second implementation, if the second device has indicated the first artificial intelligence model and the second artificial intelligence model to the first device, the second device may send third link information to the first device. The third link information indicates the connection relationship between the M first nodes in the first artificial intelligence model and the Q second nodes in the second artificial intelligence model.

Optionally, in the implementation, the first artificial intelligence model and the second artificial intelligence model may be referred to as basic models. In other words, the third artificial intelligence model includes a plurality of basic models.

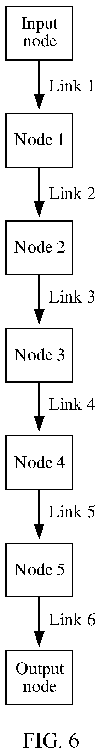

With reference to the foregoing descriptions, FIG. 6 is a diagram of a structure of a first artificial intelligence model according to this disclosure.

The first artificial intelligence model includes seven first nodes. The seven first nodes are sequentially serially connected, and node information of the seven first nodes is separately shown as follows.

Node information of an input node may be shown in Table 10-1.

**Table 10-1: Node information of the input node**

| Information | Descriptions of the information |
|---|---|
| Node identifier | 0 |
| Operator identifier | input |
| Parameter list configuration information | Input size: [2, 32, 13].<br>Input type: float32. |
| Weight list configuration information | / |
| Input format | Quantity of input ports: 2. |
| Output format | Quantity of output ports: 2. |

For example, node information of an output node may be shown in Table 10-2.

**Table 10-2: Node information of the output node**

| Information | Descriptions of the information |
|---|---|
| Node identifier | -1 |
| Operator identifier | output |
| Parameter list configuration information | Output type: float32. |
| Weight list configuration information | / |
| Input format | Quantity of input ports: 1. |
| Output format | Quantity of output ports: 1. |

For example, node information of a node 1 may be shown in Table 10-3.

**Table 10-3: Node information of the node 1**

| Information | Descriptions of the information |
|---|---|
| Node identifier | 1 |
| Operator identifier | dense |
| Parameter list configuration information | units=13.<br>bias=0.<br>activation=linear. |
| Weight list configuration information | D |
| Input format | Quantity of input ports: 1. |
| Output format | Quantity of output ports: 1. |

For the node 1, an operator corresponding to the node 1 is "dense", indicating that the node needs to implement a full-connection operation. It may be determined, based on the parameter list configuration information, that the dense operation maps an input to a tensor whose step is 13, the bias vector is 0, and the activation function is a linear activation function. It may be determined, based on the weight list configuration information, that a value of a mapping matrix is D. Therefore, an output of the node may be expressed as y=D*x, where x represents the input of the node.

For example, node information of a node 2 may be shown in Table 10-4.

**Table 10-4: Node information of the node 2**

| Information | Descriptions of the information |
|---|---|
| Node identifier | 2 |
| Operator identifier | conv2D |
| Parameter list configuration information | kemel_size=(3, 3).<br>stride=(1, 1).<br>padding='same'. |
| Weight list configuration information | ker |
| Input format | Quantity of input ports: 1. |
| Output format | Quantity of output ports: 2. |

For example, node information of a node 3 and a node 5 may be shown in Table 10-5.

**Table 10-5: Node information of the node 3 and the node 5**

| Information | Descriptions of the information |
|---|---|
| Node identifier | 3 and 5. |
| Operator identifier | conv2D |
| Parameter list configuration information | kemel_size=(3, 3).<br>stride=(1, 1).<br>padding='same'. |
| Weight list configuration information | ker2 |
| Input format | Quantity of input ports: 1. |
| Output format | Quantity of output ports: 1. |

For example, node information of a node 4 may be shown in Table 10-6.

**Table 10-6: Node information of the node 4**

| Information | Descriptions of the information |
|---|---|
| Node identifier | 4 |
| Operator identifier | concat |
| Parameter list configuration information | axis=1. |
| Weight list configuration information | / |
| Input format | Quantity of input ports: 2. |
| Output format | Quantity of output ports: 1. |

For the node 4, an operator corresponding to the node 4 is "concat", indicating that the node needs to implement a concatenation operation. It may be determined, based on the parameter list configuration information, that the concatenation operation is performed in a 1st dimension (a dimension identifier starts from 0) of a tensor. The input format represents that the node has two inputs and one output. Therefore, the node 4 concatenates the two inputs along the 1st dimension into one longer tensor. The longer tensor serves as an output of the node. For example, assuming that an input of the node 4 is two tensors whose dimensions are [N1, N2, N3] and [N1, N4, N3], the node 4 concatenates the two tensors into a tensor whose dimension is [N1, N2+N4, N3] and outputs the tensor.

Further, links between an input node and an output node in the first artificial intelligence model shown in FIG. 6 are sequentially a link 1 to a link 6. First link information of the first artificial intelligence model may be shown in Table 10-7.

**Table 10-7: First link information**

| Information | Descriptions of the information |
|---|---|
| Link attribute information of the link 1 | Source node: input node.<br>Input port: output port 0 of the input node.<br>Target node: node 1.<br>Output port: input port 0 of the node 1. |
| Link attribute information of a link 2 | Source node: node 1.<br>Input port: output port 0 of the node 1.<br>Target node: node 2.<br>Output port: input port 0 of the node 2. |
| Link attribute information of a link 3 | Source node: node 2.<br>Input port: output port 0 of the node 2.<br>Target node: node 3.<br>Output port: input port 0 of the node 3. |
| Link attribute information of a link 4 | Source node: node 3.<br>Input port: output port 0 of the node 3.<br>Target node: node 4.<br>Output port: input port 0 of the node 4. |
| Link attribute information of a link 5 | Source node: node 4.<br>Input port: output port 0 of the node 4.<br>Target node: node 5.<br>Output port: input port 0 of the node 5. |
| Link attribute information of the link 6 | Source node: node 5.<br>Input port: output port 0 of the node 5.<br>Target node: output node.<br>Output port: input port 0 of the output node. |

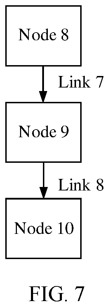

FIG. 7 is a diagram of a structure of a second artificial intelligence model according to this disclosure;

The second artificial intelligence model includes three second nodes. Node identifiers of the three second nodes are respectively 8, 9, and 10, and node information of the three second nodes is shown as follows.

**Table 11-1 Node information**

| Information | Descriptions of the information |
|---|---|
| Node identifier | 8, 9, and 10 |
| Operator identifier | conv2D |
| Parameter list configuration information | kernel_size=(3, 3).<br>stride=(1, 1).<br>padding='same'. |
| Weight list configuration information | ker3 |
| Input format | Quantity of input ports: 1. |
| Output format | Quantity of output ports: 1. |

The three second nodes included in the second artificial intelligence model are sequentially serially connected. Specifically, an output port 0 of a node 8 is connected to an input port 0 of a node 9, and a link between the node 8 and the node 9 is a link 7. An output port 0 of the node 9 is connected to an input port 0 of a node 10, and a link between the node 9 and the node 10 is a link 8.

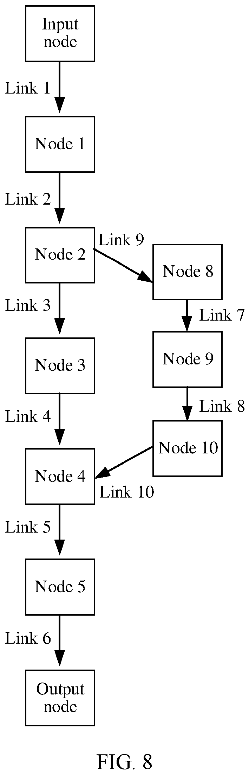

If a third artificial intelligence model includes a first artificial intelligence model and a second artificial intelligence model, specifically, as shown in FIG. 8, in addition to a third artificial intelligence model including a first artificial intelligence model and a second artificial intelligence model, an output port 1 of a node 2 in the first artificial intelligence model is connected to an input port 0 of a node 8 in the second artificial intelligence model, and a link between the node 2 and the node 8 is a link 9. An output port 0 of a node 10 in the second artificial intelligence model is connected to an input port 1 of a node 4 in the first artificial intelligence model, and a link between the node 10 and the node 4 is a link 10.

In a first implementation, if a second device has indicated the first artificial intelligence model to a first device, but has not indicated the second artificial intelligence model to the first device, second link information sent by the second device to the first device may be shown in Table 11-2.

**Table 11-2: Second link information**

| Information | Descriptions of the information |
|---|---|
| Link attribute information of a link 7 | Source node: node 8.<br>Input port: output port 0 of the node 8.<br>Target node: node 9.<br>Output port: input port 0 of the node 9. |
| Link attribute information of a link 8 | Source node: node 0.<br>Input port: output port 0 of the node 0.<br>Target node: node 10.<br>Output port: input port 0 of the node 10. |
| Link attribute information of the link 9 | Source node: node 2.<br>Input port: output port 1 of the node 2.<br>Target node: node 8.<br>Output port: input port 0 of the node 8. |
| Link attribute information of the link 10 | Source node: node 10.<br>Input port: output port 0 of the node 10.<br>Target node: node 4.<br>Output port: input port 1 of the node 4. |

In a second implementation, if a second device has indicated the first artificial intelligence model and the second artificial intelligence model to a first device, third link information sent by the second device to the first device may be shown in Table 11-3.

**Table 11-3: Third link information**

| Information | Descriptions of the information |
|---|---|
| Link attribute information of the link 9 | Source node: node 2.<br>Input port: output port 1 of the node 2.<br>Target node: node 8.<br>Output port: input port 0 of the node 8. |
| Link attribute information of the link 10 | Source node: node 10.<br>Input port: output port 0 of the node 10.<br>Target node: node 4.<br>Output port: input port 1 of the node 4. |

According to the foregoing methods, when an artificial intelligence model may be constituted by combining a plurality of artificial intelligence models, the second device may indicate only a part of artificial intelligence models that constitute the artificial intelligence model, so that overheads for describing the artificial intelligence model and overheads for transmitting the artificial intelligence model are further reduced, improving system resource utilization.

In the foregoing embodiments provided in this application, the method provided in embodiments of this application is described from a perspective of interaction between devices. To implement functions in the method provided in embodiments of this application, the access network device or the terminal device may include a hardware structure and/or a software module, and implement the functions in a form of the hardware structure, the software module, or a combination of the hardware structure and the software module. Whether a function in the functions is performed by using the hardware structure, the software module, or the combination of the hardware structure and the software module depends on a specific application and a design constraint of the technical solutions.

In embodiments of this application, module division is an example, and is merely a logical function division. During actual implementation, another division manner may be used. In addition, functional modules in embodiments of this application may be integrated into one processor, or may exist alone physically, or two or more modules may be integrated into one module. The foregoing integrated module may be implemented in a form of hardware, or may be implemented in a form of a software functional module.

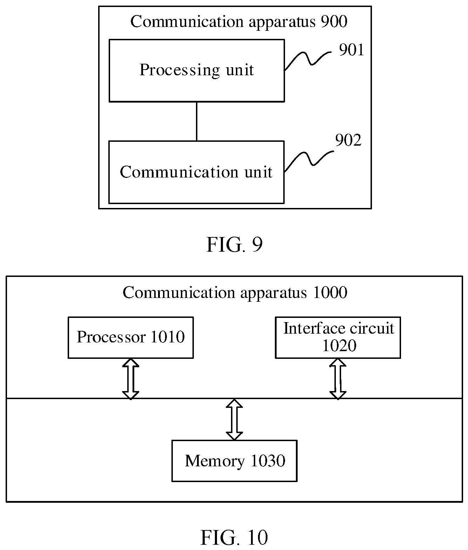

Same as the foregoing concept, as shown in FIG. 9, an embodiment of this application further provides a communication apparatus, configured to implement a function of the first device or the second device in the foregoing method. For example, the apparatus may be a software module or a chip system. In this embodiment of this application, the chip system may include a chip, or may include a chip and another discrete component. The communication apparatus 900 may include a processing unit 901 and a communication unit 902.

In this embodiment of this application, the communication unit may also be referred to as a transceiver unit, and may include a sending unit and/or a receiving unit, respectively configured to perform a sending step and a receiving step of the first device or the second device in the foregoing method embodiment.

With reference to FIG. 9 and FIG. 10, the following describes in detail the communication apparatuses provided in embodiments of this application. It should be understood that descriptions of apparatus embodiments correspond to the descriptions of the method embodiment. Therefore, for content that is not described in detail, refer to the method embodiment. For brevity, details are not described herein again.

The communication unit may also be referred to as a transceiver apparatus. The processing unit may also be referred to as a processing module, a processing apparatus, or the like. Optionally, a component that is in the communication unit 902 and that is configured to implement a receiving function may be considered as the receiving unit, and a component that is in the communication unit 902 and that is configured to implement a sending function may be considered as the sending unit. In other words, the communication unit 902 includes the receiving unit and the sending unit. The communication unit sometimes may be implemented as a transceiver machine, a transceiver, a transceiver circuit, or the like. The processing unit sometimes may be implemented as a processor, a processing board, or the like. The receiving unit sometimes may be implemented as a receiver machine, a receiver, a receiver circuit, or the like. The sending unit sometimes may be implemented as a transmitter machine, a transmitter, a transmitter circuit, or the like.

When the communication apparatus 900 performs the function of the first device in the procedure shown in FIG. 3 in the foregoing embodiment,

the communication unit is configured to receive N pieces of first node information from a second device, where one piece of first node information indicates information about at least one first node in a first artificial intelligence model, and N is an integer greater than 1; and
the processing unit is configured to determine the first artificial intelligence model based on the N pieces of first node information and first link information, where the first link information indicates a connection relationship between M first nodes in the first artificial intelligence model, and M is an integer greater than or equal to N.

When the communication apparatus 900 performs the function of the second device in the procedure shown in FIG. 3 in the foregoing embodiment,

the processing unit is configured to determine N pieces of first node information based on a first artificial intelligence model, where one piece of first node information indicates information about at least one first node in the first artificial intelligence model, and N is an integer greater than 1; and

the communication unit is configured to send the N pieces of first node information and first link information to a first device, where the first link information indicates a connection relationship between M first nodes in the first artificial intelligence model, and M is an integer greater than or equal to N.

When the communication apparatus 900 performs the function of the second device in the procedure shown in FIG. 3 in the foregoing embodiment,

the processing unit is configured to determine N pieces of first node information based on a first artificial intelligence model, where one piece of first node information indicates information about at least one first node in the first artificial intelligence model, the N pieces of first node information indicate information about M first nodes in the first artificial intelligence model, N is an integer greater than 1, and M is an integer greater than or equal to N; and a connection relationship between the M first nodes is indicated by first link information, and the connection relationship indicated by the connection relationship is preset; and

the communication unit is configured to send the N pieces of first node information to a first device.

The foregoing is merely an example. The processing unit 901 and the communication unit 902 may further perform other functions. For more detailed descriptions, refer to the related descriptions in the method embodiment shown in FIG. 3. Details are not described herein again.

FIG. 10 shows a communication apparatus 1000 according to an embodiment of this application. The apparatus shown in FIG. 10 may be an implementation of a hardware circuit of the apparatus shown in FIG. 9. The communication apparatus is applicable to the flowchart shown above, and performs a function of the first device or the second device in the foregoing method embodiment. For ease of description, FIG. 10 shows only main components of the communication apparatus.

As shown in FIG. 10, the communication apparatus 1000 includes a processor 1010 and an interface circuit 1020. The processor 1010 and the interface circuit 1020 are coupled to each other. It may be understood that the interface circuit 1020 may be a transceiver, a pin, or an input/output interface. Optionally, the communication apparatus 1000 may further include a memory 1030, configured to: store instructions executed by the processor 1010, store input data needed by the processor 1010 to run the instructions, or store data generated after the processor 1010 runs the instructions. Optionally, a part or all of the memory 1030 may be located in the processor 1010.

When the communication apparatus 1000 is configured to implement the method shown in FIG. 3, the processor 1010 is configured to implement a function of the foregoing processing unit 901, and the interface circuit 1020 is configured to implement a function of the foregoing communication unit 902.

It may be understood that the processor in embodiments of this application may be a central processing unit, or may be another general-purpose processor, a digital signal processor, an application-specific integrated circuit or another programmable logic device, a transistor logic device, a hardware component, or any combination thereof. The general-purpose processor may be a microprocessor or any conventional processor.

The memory in embodiments of this application may be a random access memory, a flash memory, a read-only memory, a programmable read-only memory, an erasable programmable read-only memory, an electrically erasable programmable read-only memory, a register, a hard disk drive, a removable hard disk drive, or any other form of a storage medium well-known in the art.

A person skilled in the art should understand that embodiments of this disclosure may be provided as a method, a system, or a computer program product. Therefore, this disclosure may use a form of hardware only embodiments, software only embodiments, or embodiments with a combination of software and hardware. In addition, this disclosure may use a form of a computer program product that is implemented on one or more computer-usable storage media (including but not limited to a disk memory, an optical memory, and the like) that include computer-usable program code.

This disclosure is described with reference to the flowcharts and/or block diagrams of the method, the device (the system), and the computer program product according to this disclosure. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this disclosure without departing from the scope of this disclosure. In this way, if these modifications and variations of this disclosure fall within the scope of the claims of this disclosure and equivalent technologies thereof, this disclosure is also intended to cover these modifications and variations.

**Claims**

1. An information transmission method, wherein the method is applied to a first device side, and comprises:

   receiving N pieces of first node information from a second device, wherein one piece of first node information indicates information about at least one first node in a first artificial intelligence model, and N is an integer greater than 1; and
   determining the first artificial intelligence model based on the N pieces of first node information and first link information, wherein the first link information indicates a connection relationship between M first nodes in the first artificial intelligence model, and M is an integer greater than or equal to N.

2. The method according to claim 1, wherein the connection relationship indicated by the connection relationship is preset; and
   the determining the first artificial intelligence model based on the N pieces of first node information and first link information comprises:

   determining, based on the N pieces of first node information, the M first nodes comprised in the first artificial intelligence model; and
   determining the first artificial intelligence model based on the preset connection relationship and the M first nodes.

3. The method according to claim 1, wherein the first link information is from the second device; and
   the determining the first artificial intelligence model based on the N pieces of first node information and first link information comprises:

   determining, based on the N pieces of first node information, the M first nodes comprised in the first artificial intelligence model; and
   determining the first artificial intelligence model based on the connection relationship indicated by the first link information and the M first nodes.

4. The method according to any one of claims 1 to 3, wherein
   the first link information indicates X pieces of link attribute information, wherein X is an integer greater than 0; and each piece of link attribute information corresponds to one link, and the link attribute information indicates at least one of the following information of a link corresponding to the link attribute information:

   a node that is in the M first nodes and that serves as a source node of the link;
   a port that is in the source node and that serves as an input port of the link;
   a node that is in the M first nodes and that serves as a target node of the link; or
   a port that is in the target node and that serves as an output port of the link.

5. The method according to any one of claims 1 to 4, wherein the first node information indicates at least one of the following information:

   a node identifier of the at least one first node corresponding to the first node information;

an input format of the at least one first node; or
an output format of the at least one first node.

6. The method according to any one of claims 1 to 5, wherein the method further comprises:

receiving P pieces of second node information from the second device, wherein P is an integer greater than 0; and the P pieces of second node information indicate information about Q second nodes in a second artificial intelligence model, and Q is an integer greater than or equal to P.

7. The method according to claim 6, wherein second link information is received from the second device, wherein the second link information indicates a connection relationship between the Q second nodes in the second artificial intelligence model.

8. The method according to claim 6 or 7, wherein if a third artificial intelligence model comprises the first artificial intelligence model and the second artificial intelligence model, the method further comprises:

receiving third link information from the second device, wherein the third link information indicates a connection relationship between the M first nodes in the first artificial intelligence model and the Q second nodes in the second artificial intelligence model; and
determining the third artificial intelligence model based on the first artificial intelligence model, the second artificial intelligence model, and the third link information.

9. An information transmission method, wherein the method is applied to a second device side, and comprises:

determining N pieces of first node information based on a first artificial intelligence model, wherein one piece of first node information indicates information about at least one first node in the first artificial intelligence model, the N pieces of first node information indicate information about M first nodes in the first artificial intelligence model, N is an integer greater than 1, and M is an integer greater than or equal to N; and
a connection relationship between the M first nodes is indicated by first link information, and the connection relationship is preset.

10. An information transmission method, wherein the method is applied to a second device side, and comprises:

determining N pieces of first node information based on a first artificial intelligence model, wherein one piece of first node information indicates information about at least one first node in the first artificial intelligence model, and N is an integer greater than 1; and
sending the N pieces of first node information and first link information to a first device, wherein the first link information indicates a connection relationship between M first nodes in the first artificial intelligence model, and M is an integer greater than or equal to N.

11. The method according to claim 9 or 10, wherein
the first link information indicates X pieces of link attribute information, wherein X is an integer greater than 0; and each piece of link attribute information corresponds to one link, and the link attribute information indicates at least one of the following information of a link corresponding to the link attribute information:

a node that is in the M first nodes and that serves as a source node of the link;
a port that is in the source node and that serves as an input port of the link;
a node that is in the M first nodes and that serves as a target node of the link; or
a port that is in the target node and that serves as an output port of the link.

12. The method according to any one of claims 9 to 11, wherein the first node information indicates at least one of the following information:

a node identifier of the at least one first node corresponding to the first node information;
an input format of the at least one first node; or
an output format of the at least one first node.

13. The method according to any one of claims 9 to 12, wherein the method further comprises:

sending P pieces of second node information and second link information to the first device, wherein P is an integer greater than 0; and

the P pieces of second node information indicate information about Q second nodes in a second artificial intelligence model, and Q is an integer greater than or equal to P; and the second link information indicates a connection relationship between the Q second nodes.

14. The method according to claim 13, wherein if a third artificial intelligence model comprises the first artificial intelligence model and the second artificial intelligence model, the method further comprises:
sending third link information to the first device, wherein the third link information indicates a connection relationship between the M first nodes in the first artificial intelligence model and the Q second nodes in the second artificial intelligence model.

15. A communication apparatus, comprising a processor and a memory, wherein the processor is coupled to the memory, and the processor is configured to perform the method according to any one of claims 1 to 8.

16. A communication apparatus, comprising a unit configured to implement the method according to any one of claims 1 to 8.

17. A communication apparatus, comprising a processor and a memory, wherein the processor is coupled to the memory, and the processor is configured to perform the method according to any one of claims 9 to 14.

18. A communication apparatus, comprising a unit configured to implement the method according to any one of claims 9 to 14.

19. A computer-readable storage medium, wherein the storage medium stores a computer program or instructions, and when the computer program or the instructions are run on a computer, the method according to any one of claims 1 to 14 is implemented.

20. A computer program product, comprising a computer program or instructions, wherein when the computer program or the instructions are run on a computer, the method according to any one of claims 1 to 14 is implemented.

21. A communication system, comprising the communication apparatus according to claim 15 or 16 and the communication apparatus according to claim 17 or 18.

FIG. 1

FIG. 2

Second device

First device

S301: The second device determines N pieces of first node information based on a first artificial intelligence model

S302: The second device sends the N pieces of first node information to the first device; and correspondingly, the first device receives the N pieces of first node information from the second device

N pieces of first node information

S303: The first device determines the first artificial intelligence model based on the N pieces of first node information and first link information

FIG. 3

Input node → Node 1 → Node 2 → Node 3 → Output node

FIG. 4

Input node | Node 1 | Node 3 | Output node

| x0 | Link 1 | 0          0 | Link 3 | 0          0 | Link 5 | 0          y0 |
| x1 | Link 2 | 0          0 | Link 4 | 1          1 | Link 6 | 1          y1 |

Node 2

FIG. 5

FIG. 6

Node 8

Link 7

Node 9

Link 8

Node 10

FIG. 7

FIG. 8

Communication apparatus 900

Processing unit ⟿ 901

Communication unit ⟿ 902

FIG. 9

Communication apparatus 1000

Processor 1010

Interface circuit 1020

Memory 1030

FIG. 10

## INTERNATIONAL SEARCH REPORT

International application No.

**PCT/CN2023/081870**

| A. | CLASSIFICATION OF SUBJECT MATTER |
|---|---|

H04L41/14(2022.01)i

According to International Patent Classification (IPC) or to both national classification and IPC

| B. | FIELDS SEARCHED |
|---|---|

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

3GPP, CJFD, CNTXT, ENTXTC, VEN: AI模型, ML模型, 表示, 参数, 传输, 存储, 大, 递送, 发送, 缓存, 寄存器, 交互, 交换, 节点信息, 开销, 连接关系, 连接信息, 连接性, 链接关系, 链路, 描述, 配置, 拓扑, AI, Artificial, Cache, Configuration, connection, deliver, Description, exchange, Intelligence, Large, LPP, ML, Model, Overhead, Parameters, Representation, send, Store, Transmission

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022041285 A1 (HUAWEI TECHNOLOGIES CO., LTD.) 03 March 2022 (2022-03-03) description, page 8, line 31-page 9, line 20 | 1-21 |
| A | CN 114143799 A (HUAWEI TECHNOLOGIES CO., LTD.) 04 March 2022 (2022-03-04) entire document | 1-21 |
| A | CN 113435605 A (FIBERHOME TELECOMMUNICATION TECHNOLOGIES CO., LTD. et al.) 24 September 2021 (2021-09-24) entire document | 1-21 |
| A | US 2021125028 A1 (SAMSUNG ELECTRONICS CO., LTD.) 29 April 2021 (2021-04-29) entire document | 1-21 |
| A | WO 2022013095 A1 (TELEFONAKTIEBOLAGET LM ERICSSON (PUBL)) 20 January 2022 (2022-01-20) entire document | 1-21 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 June 2023** | **07 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/081870**

| Patent document cited in search report | | | Publication date (day/month/year) | Patent family member(s) | | | Publication date (day/month/year) |
|---|---|---|---|---|---|---|---|
| WO | 2022041285 | A1 | 03 March 2022 | None | | | |
| CN | 114143799 | A | 04 March 2022 | None | | | |
| CN | 113435605 | A | 24 September 2021 | None | | | |
| US | 2021125028 | A1 | 29 April 2021 | WO | 2019245186 | A1 | 26 December 2019 |
| | | | | EP | 3770826 | A1 | 27 January 2021 |
| | | | | KR | 20200003310 | A | 09 January 2020 |
| WO | 2022013095 | A1 | 20 January 2022 | EP | 4179753 | A1 | 17 May 2023 |

Form PCT/ISA/210 (patent family annex) (July 2022)

## EP 4 478 677 A1

**Patent documents cited in the description**

- CN 202210288551